(19) Europäisches Patentamt
European Patent Office
Office européen des brevets

(11) EP 1 463 410 B1

(12) EUROPÄISCHE PATENTSCHRIFT

(45) Veröffentlichungstag und Bekanntmachung des Hinweises auf die Patenterteilung:
**15.04.2009 Patentblatt 2009/16**

(21) Anmeldenummer: **02796165.5**

(22) Anmeldetag: **12.08.2002**

(51) Int Cl.:
***A01N 47/12*** (2006.01)

(86) Internationale Anmeldenummer:
**PCT/EP2002/009000**

(87) Internationale Veröffentlichungsnummer:
**WO 2003/017760 (06.03.2003 Gazette 2003/10)**

# (54) FUNGIZIDE WIRKSTOFFKOMBINATIONEN

FUNGICIDE ACTIVE SUBSTANCE COMBINATIONS

COMBINAISONS DE SUBSTANCES ACTIVES FONGICIDES

(84) Benannte Vertragsstaaten:
**AT BE BG CH CY CZ DE DK EE ES FI FR GB GR IE IT LI LU MC NL PT SE SK TR**

(30) Priorität: **24.08.2001 DE 10141618**

(43) Veröffentlichungstag der Anmeldung:
**06.10.2004 Patentblatt 2004/41**

(73) Patentinhaber: **Bayer CropScience AG**
**40789 Monheim (DE)**

(72) Erfinder:
- **WACHENDORFF-NEUMANN, Ulrike**
  **56566 Neuwied (DE)**
- **SEITZ, Thomas**
  **40764 Langenfeld (DE)**

(56) Entgegenhaltungen:

**EP-A- 0 610 764**
**EP-A1- 0 610 764**
**EP-A1- 0 627 163**
**EP-A1- 0 707 792**
**WO-A-00/30440**
**WO-A-00/36916**
**WO-A-01/44215**
**WO-A-98/25465**
**WO-A-98/53691**
**WO-A-99/29175**
**WO-A2-01/44215**
**WO-A2-99/63813**
**FR-A1- 2 732 191**

- **NEUBAUER K: "MELODY MULTI-GEGEN PERONOSPORA FUER ALLE WEINBAULAGEN" PFLANZENARZT, SCHOLLE VERLAG, VIENNA, AT, Bd. 54, Nr. 3, 2001, Seite 28, XP008074041 ISSN: 0031-6733**
- **STENZEL K ET AL: "SZX 722: A NOVEL SYSTEMIC OOMYCETE FUNGICIDE" FARMAKOLOGIYA I TOKSIKOLOGIYA, MEDICINA, MOSCOW, RU, Bd. 2, 1998, Seiten 367-374, XP008046634 ISSN: 0014-8318**
- **DUTZMANN S: "IPROVALICARB (SZX 0722) - EIN NEUS FUNGIZID MIT SPEZIFISCHER WIRKUNG GEGEN OOMYCETEN IPROVALICARB (SZX 0722) - A NOVEL FUNGICIDE WITH SPECIFIC ACTIVITY AGAINST OOMYCETES" PFLANZENSCHUTZ NACHRICHTEN BAYER, BAYER, LEVERKUSSEN, DE, Bd. 52, Nr. 1, 1999, Seiten 15-32, XP008073928 ISSN: 0340-1723**

Bemerkungen:
Die Akte enthält technische Angaben, die nach dem Eingang der Anmeldung eingereicht wurden und die nicht in dieser Patentschrift enthalten sind.

EP 1 463 410 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft neue Wirkstoffkombinationen, die aus einem bekannten Valinamid-Derivat einerseits und einem weiteren bekannten Wirkstoff andererseits bestehen und sehr gut zur Bekämpfung von phytopathogenen Pilzen geeignet sind.

Es ist bereits bekannt, dass 1-Methylethyl [2-methyl-1-[[[(1S)-1-(4-methylphenyl)ethyl]amino]carbonyl]propyl]-carbamat fungizide Eigenschaften besitzt (vgl. EP-A-472 996). Die Wirksamkeit dieses Stoffes ist gut, lässt aber bei niedrigen Aufwandmengen in manchen Fällen zu wünschen übrig.

Schließlich ist bekannt, dass Valinamid-Derivate der Formel (I) in Kombination mit anderen Wirkstoffen eingesetzt werden können (vgl. EP-A-610 764, EP-A-944 318, WO 00/030440, WO 00/045638). Die Wirkung dieser Mischungen ist gut, lässt aber in manchen Fällen zu wünschen übrig.

WO 01/44215 beschreibt die Kombination von Benthiavalicarb mit phosphoriger Säure.

Es wurde nun gefunden, dass die neue Wirkstoffkombinat aus dem Valinamid-Derivat der Formel (I)

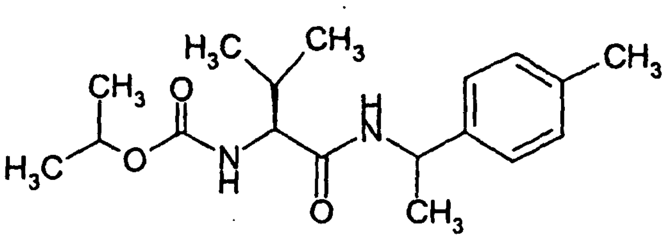

(I)

(Iprovalicarb)

und

(22) der phosphorigen Säure der Formel

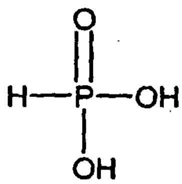

(XXIII)

(phosphorige Säure)

sehr gute fungizide Eigenschaften besitzen.

Überraschenderweise ist die fungizide Wirkung der erfindungsgemäßen Wirkstoffkombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Aus der Strukturformel für den Wirkstoff der Formel (I) ist ersichtlich, dass die Verbindung zwei asymmetrisch substituierte Kohlenstoffatome aufweist. Das Produkt kann daher in Form einer Mischung verschiedener Isomere oder als einzelnes Isomer vorliegen. Bevorzugt sind Verbindungen der Formel (I-a), in denen der Aminosäureteil aus iso-Propoxycarbonyl-L-valin gebildet wird und der Phenethylaminteil die R(+)-Konfiguration aufweist.

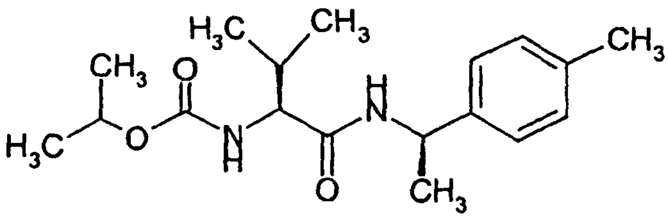

(I-a)

Mischungspartner der Verbindungen der Formel (I) ist

(22) Phosphorige Säure (XXIII).

Mischungspartner der Verbindungen der Formel (I-a) ist

(22) Phosphorige Säure (XXIII).

Die Verbindung der Formel (XXIII) ist bekannt und käuflich erwerbbar.

Die erfindungsgemäßen Wirkstoffkombinationen enthalten neben einem Wirkstoff der Formel (I) den Wirkstoff der Gruppen (22). Sie können darüberhinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden.

Im allgemeinen entfallen auf 1 Gewichtsteil an Wirkstoff der Formel (I)

0,5 bis 100 Gewichtsteile, vorzugsweise 0,5 bis 50 Gewichtsteile an Wirkstoff aus Gruppe (22),

Im allgemeinen entfallen auf 1 Gewichtsteil an Wirkstoff der Formel (I-a)

0,5 bis 150 Gewichtsteile, vorzugsweise 1 bis 100 Gewichtsteile an Wirkstoff aus der Gruppe (22),

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung Phytophthora infestans und Plasmopara viticola.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische

Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Emährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der

Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier-und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Auch eine Mischung mit anderen bekannten Wirkstoffen, wie Herbiziden oder mit Düngemitteln und Wachstumsregulatoren ist möglich.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von <u>m</u> g/ha bedeutet,

Y den Wirkungsgrad beim Einsatz des Wirkstoffes B in einer Aufwandmenge von n g/ha bedeutet und
E den Wirkungsgrad beim Einsatz der Wirkstoffe A und B in Aufwandmengen von m und n g/ha bedeutet,

dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.
Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).
Die Erfindung wird durch die folgenden Beispiele veranschaulicht. Die Erfindung ist jedoch nicht auf die Beispiele limitiert.

## Patentansprüche

1. Wirkstoffkombinationen, enthaltend eine Verbindung der Formel (I)

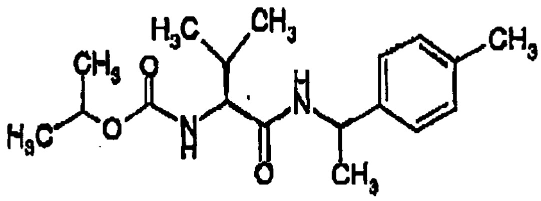

(I)

und

(22) phosphorige Säure der Formel

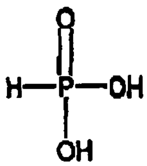

(XXIII),

2. Mittel gemäß Anspruch 1, **dadurch gekennzeichnet, dass** in den Wirkstoffkombinationen das Gewichtsverhältnis von Wirkstoff der Formel (I) zu

- Wirkstoff der Gruppe (22) zwischen 1:0,5 und 1:100 liegt.

3. Wirkstoffkombinationen, enthaltend eine Verbindung der Formel (I-a)

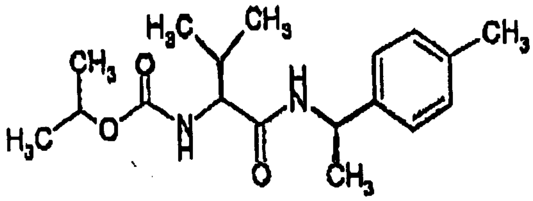

(I-a)

und

(22) phosphorige Säure der Formel

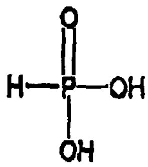

(XXIII) .

4. Mittel gemäß Anspruch 3 **dadurch gekennzeichnet, dass** in den Wirkstoffkombinationen das Gewichtsverhältnis von Wirkstoff der Formel (I-a) zu

- Wirkstoff der Gruppe (22) zwischen 1:0,5 und 1:150 liegt.

5. Verfahren zur Bekämpfung von Pilzen, **dadurch gekennzeichnet, daß** man Wirkstoffkombinationen gemäß mindestens einem der Ansprüche 1 bis 4 auf die Pilze und/oder deren Lebensraum ausbringt.

6. Verwendung von Wirkstoffkombinationen gemäß mindestens einem der Ansprüche 1 bis 4 zur Bekämpfung von Pilzen.

7. Verfahren zur Herstellung von fungiziden Mitteln, **dadurch gekennzeichnet, daß** man Wirkstoffkombinationen gemäß mindestens einem der Ansprüche 1 bis 4 mit Streckmitteln und/oder oberflächenaktiven Stoffen vermischt.

**Claims**

1. Active compound combinations, comprising a compound of the formula (I)

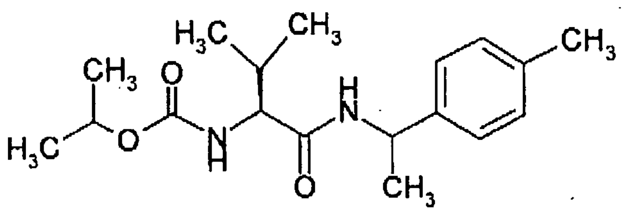

(I)

and

(22) phosphorous acid of the formula

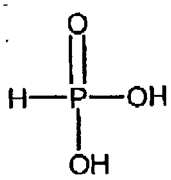

(XXIII).

2. Compositions according to Claim 1, **characterized in that** in the active compound combinations the weight ratio of active compound of the formula (I) to

- active compound of group (22) is from 1:0.5 to 1:100.

3. Active compound combinations, comprising a compound of the formula (I-a)

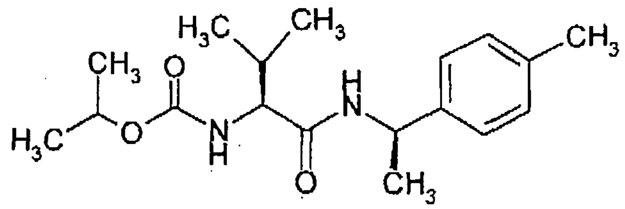

(I-a)

and

(22) phosphorous acid of the formula

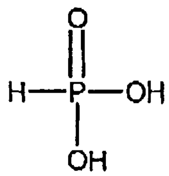

(XXIII).

4. Compositions according to Claim 3, **characterized in that** in the active compound combinations the weight ratio of active compound of the formula (I-a) to

- active compound of group (22) is from 1:0.5 to 1:150.

5. Method for controlling fungi, **characterized in that** active compound combinations according to at least one of Claims 1 to 4 are applied to the fungi and/or their habitat.

6. Use of active compound combinations according to at least one of Claims 1 to 4 for controlling fungi.

7. Process for preparing fungicidal compositions, **characterized in that** active compound combinations according to at least one of Claims 1 to 4 are mixed with extenders and/or surfactants.

## Revendications

1. Combinaisons de substances actives, contenant un composé de formule (I)

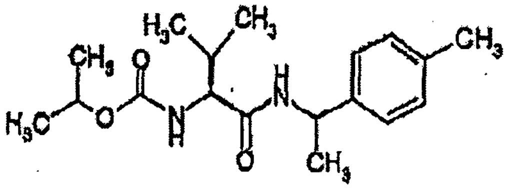

(I)

et

(22) de l'acide phosphoreux de formule

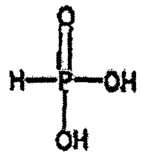

(XXIII).

2. Composition suivant la revendication 1, **caractérisée en ce que** dans les combinaisons de substances actives, le rapport en poids de la substance active de formule (I) à la substance active du groupe (22) est compris entre 1:0,5 et 1:100.

3. Combinaisons de substances actives, contenant un composé de formule (I-a)

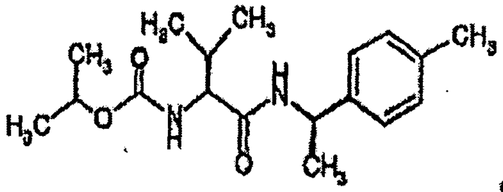

(I-a)

et

(22) de l'acide phosphoreux de formule

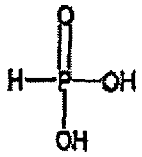

(XXIII).

4. Composition suivant la revendication 3, **caractérisée en ce que** dans les combinaisons de substances actives, le rapport en poids de la substance active de formule (I-a) à la substance active du groupe (22) est copmpris entre 1: 0,5 et 1:150.

5. Procédé de lutte contre des champignons, **caractérisé en ce qu'**on épand des combinaisons de substances actives suivant au moins l'une des revendications 1 à 4 sur les champignons et/ou sur leur milieu.

6. Utilisation de combinaisons de substances actives suivant au moins l'une des revendications 1 à 4 pour combattre des champignons.

7. Procédé de préparation de compositions fongicides, **caractérisé en ce qu'**on mélange des combinaisons de substances actives suivant au moins l'une des revendications 1 à 4 avec des diluants et/ou des substances tensio-actives.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 472996 A
- EP 610764 A
- EP 944318 A
- WO 00030440 A
- WO 00045638 A
- WO 0144215 A


### In der Beschreibung aufgeführte Nicht-Patentliteratur


- **S.R. COLBY.** Calculating Synergistic and Antagonistic Responses of Herbicide Combinations. *Weeds,* 1967, vol. 15, 20-22